# NEUE EUROPÄISCHE PATENTSCHRIFT

(11) **EP 1 070 689 B2**
(45) Veröffentlichungstag und Bekanntmachung des Hinweises auf die Entscheidung über den Einspruch: **29.09.2010**
(45) Hinweis auf die Patenterteilung: 12.09.2007
(21) Anmeldenummer: 00114520.0
(22) Anmeldetag: 06.07.2000
(51) Int. Cl.: C04B 41/49, C08L 83/04

(54) **Verfahren und System zur Herstellung einer Fassadencreme**
Method and system for manufacturing a facade cream
Procédé et système pour fabriquer une crème pour façades

(30) Priorität: 20.07.1999 DE 19933927; 22.09.1999 DE 19945305
(43) Veröffentlichungstag der Anmeldung: 24.01.2001
(73) Patentinhaber: Remmers Baustofftechnik GmbH, 49624 Löningen (DE)
(72) Erfinder: Janning, Friedrich, 49470 Haselünne (DE)
(74) Vertreter: Bockhorni & Kollegen

(56) Entgegenhaltungen:
- EP-A1- 1 070 689
- WO-A-00/46167
- DD-A1- 138 672
- DE-A- 19 628 035
- DE-A1- 19 646 878
- US-A- 4 247 330
- R.VOIGT: 'Pharmazeutische Technologie 7.A.', 1993 Seiten 360 - 361
- H.D. BELITZ, W. GROSCH: 'Lehrbuch der Lebensmittelchemie', Bd. 4.AUFL., 1992 Seiten 412 - 416

## Beschreibung

Die Erfindung betrifft ein Verfahren zur Herstellung einer Fassadencreme, insbesondere auf auf der Basis von Inertcremes sowie ein System zur Bereitstellung derartiger Fassadencremes.

Mineralische Baustoffe, wie Beton, Ziegel, Sandstein und ähnliches, werden üblicherweise zum Schutz gegen Witterungseinflüsse, insbesondere gegen Feuchtigkeit, mit hydrophierenden Imprägniermitteln behandelt. Dies betrifft insbesondere den Außenbereich von Gebäuden und anderen Bauwerken, aber auch In-nenbereichen, in denen eine erhöhte Feuchtigkeit auftreten kann.

Bekannte und übliche Imprägniermittel zu diesem Zweck sind Organosiliciumverbindungen. Derartige siliciumorganische Verbindungen werden vorwiegend in organischer Lösung verwandt. Es sind auch Applikationsformen in wässriger oder alkoholische Lösung bekannt. Die Applikation erfolgt üblicherweise durch Sprühen und im Flutverfahren.

Die Applikation von flüssigen Imprägniermitteln hat in der Praxis wesentliche Nachteile. Beim Auftragen auf senkrechte Flächen läuft das Imprägniermittel ab, ohne dabei hinreichende Eindringtiefen in den Baustoff zu erreichen. Dies erfordert üblicherweise mehrfache Auftragevorgänge. Bei der Applikation über Kopf tritt hierbei eine starke Tropfenbildung hinzu.

Bei der Applikation im Sprühverfahren sind aufwendige Maßnahmen zum Schutz der nicht zu behandelnden Flächen, wie Fenster samt Rahmen vorzusehen.

Das alternativ anwendbare Flutungsverfahren bedarf eines hohen gerätetechnischen Aufwandes. Auch sind hierbei nur größere geschlossene Flächen behandelbar.

Allen zuvor genannten Anwendungsformen flüssiger Imprägniermittel ist gemein, daß ein hoher Verlust an Imprägniermittel auftritt, das nicht in den Baustoff eindringt. Beim Sprühverfahren ist dies beispielsweise ablaufendes Imprägniermittel. Beim Flutungsverfahren betrifft dies inbesondere im Flutungskasten verbleibende Restmengen an Imprägniermittel sowie durch Leckagen austretendes Imprägniermittel.

Weiterhin ist allen Auftragungsverfahren von flüssigem Imprägniermittel gemeinsam, daß die Auftragungsmenge pro Flächeneinheit nur schwer kontrollierbar ist. Um eine hinreichende Imprägnierung an allen Stellen des zu schützenden Baustoffes zu gewährleisten, wird üblicherweise ein deutlicher Überschuß an Imprägniermittel auf den Baustoff aufgetragen.

Es sind auch organosiliciumhaltige Imprägniermittel für Baustoffe in Form von wässrigen Cremes bekannt. Die Anwendung von Imprägniermitteln auf Cremebasis hat gegenüber den flüssigen Imprägniermitteln die Vorteile, daß das Imprägniermittel in einfacher Weise auf senkrechte Flächen durch Streichen, Rollen oder Airless-Spritzen aufgetragen werden kann, wobei es, wenn es hinreichende Viskosität besitzt, auf der senkrechten Fläche ohne Ablaufen verbleibt. Auch sind bei der Applikation von Cremes üblicherweise Abdeckmaßnahmen auf den nicht zu behandelnden Flächen nicht mehr nötig, da die Auftragung auf die zu behandelnden Flächen in einfacher Weise beschränkt werden kann. Eine Überkopfverarbeitung von Cremes mit hinreichender Viskosität ist ebenfalls vereinfacht, wobei es zu keiner Tropfenbildung kommt.

Die EP 0 819 665 beschreibt eine wässrige Imprägniercreme auf der Basis von organosilicium Verbindungen sowie Verfahren zu deren Herstellung. Die wässrigen standfesten Cremes enthalten C₁-C₂₀-Alkyl-C₂-C₅-Alkoxysilane und Alkoxygruppen enthaltende Organopolysilane sowie Emulgatoren und ggfs. stickstoffhaltige Organopolysiloxane. Die Cremes werden hergestellt, indem in einem ersten Schritt die Alkyl-Alkoxysilane und die Alkoxygruppen enthaltenden Organopolysiloxane sowie die optionalen stickstoffhaltigen Organopolysiloxane mit dem größten Teil des Emulgators und des Wassers zu einer leicht beweglichen wässrigen Emulsion verarbeitet werden, und in einem zweiten Schritt die restlichen Alkyl-Alkoxysilane und Alkoxygruppen enthaltenden Organopolysiloxane sowie die optionalen stickstoffhaltigen Organopolysiloxane in die wässrige Emulsion eingearbeitet werden, bis eine cremeartige Konsistenz erreicht ist. Die wässrigen Imprägniercremes haben einen Wirkstoffgehalt von wenigstens 80 Gew.-%.

Ein erhebliches Problem bei der Imprägnierung unterschiedlicher Baustoffe mit hydrophobierenden Imprägniermitteln auf der Basis von Organosiliciumverbindungen besteht darin, daß in Abhängigkeit des jeweiligen Baustoffes unterschiedliche Mengen an Imprägniermittel in das zu schützende Material eingebracht werden müssen, um einen hinreichenden Schutz zu gewährleisten. So ist die einzutragende Menge an Imprägniermittel z. B. bei Beton pro Flächeneinheit deutlich höher als z. B. bei Ziegeln.

Auch ist bekannt, daß es in Abhängigkeit des zu schützenden Baustoffes eine optimale Menge an einzutragenden Imprägniermittel gibt. Hierbei handelt es sich um den Effekt, daß die Schutzwirkung durch das hydrophobierende Mittel nur bis zu einem gewissen Grad ansteigt, um dann auf einem Plateau zu verharren. Das bedeutet, daß mit steigender Eintragsmenge des Imprägniermittels eine Steigerung der Schutzwirkung bis zu dem Punkt bewirkt wird, wo ein weiterer Eintrag an Imprägniermittel keine wesentliche weitere Steigerung der Schutzwirkung bewirkt.

Den flüssigen Imprägniermitteln sowie den Imprägniermitteln auf Cremebasis nach dem Stande der Technik ist gemeinsam, daß der Eintrag der optimalen Menge an Imprägniermittel, die in Abhängigkeit des Baustoffes stark variiert, nur schwierig zu erreichen ist.

Die Auftragungsmenge pro Flächeneinheit ist bei flüssigen Imprägniermitteln aufgrund der genannten Verarbeitungsprobleme nur schwierig einzustellen bzw. zu kontrollieren. Um einen hinreichenden Feuchteschutz zu erreichen, wird bei flüssigen Imprägniermitteln üblicherweise weit über den Optimalpunkt hinaus in den Baustoff eingetragen. Dies aus wirtschaftlichen und ökologischen Gründen abzulehnen.

Die wässrige Imprägniercreme nach der EP 0 819 665 weist mit ihren Wirkstoffanteil von mehr als 80 Gew.-% einen derart hohen Wirkstoffgehalt auf, daß in den zu schützenden Baustoff zwangsweise weit über den Optimalpunkt hinaus Imprägniermittel eingetragen wird. Dies ist aus wirtschaftlichen und ökologischen Gründen abzulehnen.

Die in der EP 0 819 665 vorgeschlagene Maßnahme, die wässrigen Cremes weiterhin mit Wasser zu verdünnen führt dazu, daß die Viskosität verringert wird und das Mittel verflüssigt wird, wodurch die Anwendungsnachteile flüssiger Imprägniermitttel in Kauf genommen werden müssen.

Bei den beschriebenen cremeartigen Imprägniermitteln könnte die einzutragende Menge an Imprägniermittel über die Schichtdicke der aufgetragenen Creme eingestellt werden. Dies bedarf jedoch einer hohen Aufmerksamkeit des Anwenders und stößt unter Praxisbedingungen häufig auf Schwierigkeiten, was häufig einen unzulänglichen Imprägnierungsgrad oder einen überschüssigen Eintrag an Imprägnierungsmittel zur Folge hat.

Erschwert tritt bei der wässrigen Creme nach der EP 0 819 665 hinzu, daß aufgrund des hohen Wirkstoffanteils, mit sehr geeinger Auftragungsdicke gearbeitet werden muß, um einen überschüssigen Eintrag an Imprägniermittel zu vermeiden. Die Auftragung von geringen aber gleichmäßigen Schichtdicken stößt unter Anwendungsbedingungen, z. B. durch O-berflächenunebenheiten des zu schützenden Baustoffes, auf erhöhte Schwierigkeiten.

Beim Feuchteschutz ist es somit anzustreben, in den Baustoff die jeweilige optimale Menge an Imprägniermittel einzubringen, um somit einen bestmöglichen Schutz zu erreichen und gleichzeitig die Verwendung von überschüssigem Imprägniermittel zu vermeiden.

Aufgabe der vorliegenden Erfindung ist es, eine Imprägniercreme bereitzustellen, die einen verringerten Wirkstoffanteil enthält, um somit die Verwendung von überschüssigem Imprägniermittel zu vermeiden, die unter Anwendungsbedingungen leicht zu handhaben ist und weiterhin eine vollständige und sichere Imprägnierung des zu schützenden Baustoffes in vereinfachter Weise ermöglicht.

Eine weitere Aufgabe der vorliegenden Erfindung ist es, eine individualisierte Imprägniercreme bereitzustellen, deren Wirkstoffgehalt auf die Eigenschaften des zu schützenden Baustoffes abgestellt ist, die in vereinfachter Weise aufgetragen werden kann und weiterhin eine vollständige und sichere Imprängierung der Baustoffe ermöglicht.

Eine weitere Aufgabe der vorliegenden Erfindung ist es, ein Verfahren zur vereinfachten und sicheren Bereitstellung von individualisierten Imprägniercremes mit verringertem Wirkstoffgehalt bereitzustellen.

Eine weitere Aufgabe ist es, eine spezielle Imprägniercreme bereitszustellen, die nach dem erfindungsgemäßen Verfahren bzw. mit dem erfindungsgemäßen System hergestellt ist.

Gelöst werden die Aufgaben nach den Merkmalen der unabhängigen Ansprüche. Bevorzugte Ausführungsformen sind in den abhängigen Ansprüchen dargestellt.

Die Erfindung geht dabei den Weg, eine Imprägniercreme mit verringertem Wirkstoffanteil bereitzustellen, bei der eine Wasser-In-Öl-Emulsion aus Kohlenwasserstoffen gebildet wird, die keine hydrophobierende Wirkung des zu schützenden Baustoffes zeigen und die sich nach der Auftragung auf den Baustoff durch Abgang in den Baustoff bzw. die Umgebungsluft verflüchtigen, wobei die cremeförmige Emulsion weiterhin einen Anteil an hydrophobierenden Wirkstoffen aufweist.

Die Gesamtmenge der als hydrophobierende Wirkstoffe verwendeten Organosiliciumverbindungen kann in der Creme zwischen 1 bis 79 Gew.-%, betragen.

Durch den Kunstgriff dem hydrophobierenden Wirkstoff einen Inertstoff aus Kohlenwasserstoffen zuzuschlagen, läßt sich in vorteilhafter Weise der Wirkstoffgehalt der erstellten Creme auf einer Wasser-In-Öl-Basis variabel einstellen, wobei gleichzeitig die gewünschte cremeförmige Konsistenz beibehalten wird.

Wie bereits dargestellt, lassen sich die Wirkstoffgehalte in den Cremes über einen weiten Konzentrationsbereich einstellen. Hieraus ergibt sich in vorteilhafter Weise, daß sogenannte individualisierte Cremes bereitgestellt werden können, deren Wirkstoffgehalte auf die jeweilige Anwendung, bzw. den jeweiligen zu imprägnierenden Baustoff, eingestellt werden können.

Die Vorteile hieraus liegen auf der Hand. So können trotz unterschiedlicher Anwendungsgebiete, wie z. B. Schutz der Wetterseite oder Trockenseite des Bauwerks, oder der jeweiligen Baustoffe, die unterschiedliche Optimalmengen an einzutragenden Wirkstoff erfordern, standardisierte Auftragungsverfahren angewendet werden.

Durch die Anwendung standardisierter Auftragungsverfahren, werden auch bei der Applikation durch Laien oder unter schwierigen Baustellenbedingungen immer gleiche Schichtdicken der Imprägniercreme auf den Baustoff aufgetragen. Da in Abhängigkeit des zu imprägnierenden Baustoffes jeweils Cremes mit unterschiedliche Gehalte an Imprägniermittel aufgetragen werden, kann in einfacher Weise die optimale Menge an einzutragendem Imprägniermittel auf den jeweiligen Baustoff aufgetragen werden.

Die Bereitstellung derartiger individualisierter Imprägniercremes für die jeweiligen Baustoffe bringt einen erheblichen Herstellungs- und ggfs. Lageraufwand mit sich. Jede der individualisierten Zusammensetzungen muß aus den Grundkomponenten mit einem entsprechenden Aufwand hergestellt werden. In der Praxis kann dies dazu führen, daß der Hersteller derartiger Cremes aus fertigungstechnischen Gründen die Cremes in großen Chargen anfertigt und auf Lager hält, wonach Teilmengen je nach Anforderung der Endabnehmer verkauft werden.

Umgekehrt können individualisierte Cremes für Spezialanwendungen aufgrund der geringen Nachfrage und des hohen Fertigungsaufwandes kaum hergestellt werden, wodurch das Bedürfnis der Endabnehmer bzw. Anwender nach derartigen individualisierten Cremes nicht gedeckt wird.

Die vorliegende Erfindung stellt daher ein Verfahren zur vereinfachten Bereitstellung von Imprägniercremes, umfassend Wasser, Emulgator, Wirkstoff und einen Inerstoffanteil, bereit, mittels dem Imprägniercremes mit individuellem Wirkstoffgehalt hergestellt werden können.

Dem erfindungsgemäßen Verfahren liegt der Gedanke zugrunde zwei cremeförmige Halbprodukte bereitzustellen, bei denen eines der cremeförmigen Halbprodukte den oder die Organosiliciumwirkstoffe in hoher Konzentration enthält und das zweite cremeförmige Halbprodukt aus einer wirkstofflosen Zusammensetzung besteht. Die wirkstofflose cremeförmige Zusammensetzung wird nachfolgend Inertcreme genannt.

Das wirkstoffhaltige cremeförmige Halbprodukt wird auf einen Wirkstoffgehalt eingestellt, der wenigstens gleich groß ist wie die höchste übliche Konzentration an Wirkstoff in einer applikationsfertigen Imprägniercreme. Vorzugsweise ist der Wirkstoffgehalt in dem Halbfertigprodukt höher als der höchste übliche Wirkstoffgehalt einer applikationsfertigen Imprägniercreme. Besonders vorteilhaft ist, wenn der Wirkstoffgehalt in dem Halbfertigprodukt einen standardisierten Gehalt hat.

Erfindungsgemäß wird die applikationsfertige Imprägniercreme durch Zusammenmischen der beiden cremeförmigen Halbfertigprodukte bereitgestellt. Durch diesen Kunstgriff ist es möglich, Imprägniercremes mit jedem gewünschten Wirkstoffgehalt in einfacher Weise aus standardisierten Halbprodukten bereitzustellen.

Die Vorteile liegen insbesondere darin, daß Imprägniercremes mit individuell unterschiedlichem Wirkstoffgehalt mit geringem Aufwand bereitgestellt werden können. Ein aufwendiges Herstellen, insbesondere emulgieren unterschiedlicher Chargen mit jeweils individuellem Wirkstoffgehalt entfällt, da jeweils nur ein einziges standardisiertes Halbfertigprodukt bereitgestellt werden muß.

Je nach Bedürfnis des Endanwenders können unterschiedliche Chargen sowohl hinsichtlich des Gehaltes an Wirkstoff als auch des Chargenumfanges in einfacher Weise aus den standardisierten Halbfertigprodukten durch Mischen bereitgestellt werden. Eine aufwendige Lagerhaltung von Imprägniermitteln mit individuellem Gehalt auf Seiten des Herstellers entfällt. Sonderanfertigungen mit unüblichen Wirkstoffgehaltsmengen sind in einfacher Weise auch für kleine Chargengrößen bereitzustellen, wobei nur die Einschränkung gilt, daß der Wirkstoffgehalt der individualisierten Anwendungscreme nicht den Gehalt des wirkstoffhaltigen Halbfertigproduktes übersteigen darf.

Soweit die beiden Halbfertigprodukte jeweils standardisiert sind, entfällt darüberhinaus ein aufwendiges um- bzw. einrüsten der Herstellungsapparaturen, insbesondere im Hinblick auf unterschiedliche Wirkstoffgehalte. Da die Halbfertigprodukte aus konstanten Mengen der jeweiligen Ausgangsprodukte hergestellt werden, entfallen die Arbeitsschritte zur individuellen Ausmessung bzw. Auswägung der jeweiligen Einzelkomponenten, wodurch eine Automatisierung des Herstellungsprozesses vereinfacht wird.

Das erfindungsgemäße System zur Bereitstellung umfaßt die zuvor beschriebenen Halbfertigprodukte, die in getrennter Weise, beispielsweise in Fässern, an den Ort der Applikation verbracht. In Abhängigkeit des zu behandelnden Baustoffes kann durch den Endanwender eine jeweils optimierte und individualisierte Imprägniercreme am Ort der Applikation bereitgestellt werden. Die Bereitstellung erfolgt durch Mischen der jeweiligen Creme-in-Creme-Phasen. Der besondere Vorteil des Systems besteht darin, daß bei zu schützenden Bauwerken mit unterschiedlichen Baustoffen die jeweils notwendigen individualisierten Imprägniercremes bereitgestellt werden können. Eine Beschaffung und Lagerhaltung unterschiedlicher individualisierter Cremes entfällt. Darüberhinaus kann durch den Endanwender jeweils die exakt benötigte Menge der jeweiligen individualisierten Imprägniercreme angemischt werden, wodurch ein Verbleiben an unbenötigten Restmengen weitestgehend vermieden wird. Letzteres ist aus wirtschaftlichen und ökologischen Gründen von Vorteil.

Imprägniercremes die nach dem beschriebenen Verfahren sowie mit dem beschriebenen System hergestellt sind, werden nachfolgend detallierter beschrieben.

Das Halbfertigprodukt der Inertcreme ohne hydrophobierende Eigenschaften umfaßt aliphatische und/oder entaromatisierte Benzinkohlenwasserstoffe, Benzinkohlenwasserstoffe im Bereich C₉-C₁₂ mit geringen Aromatenanteil, isoparaffinische Kohlenwasserstoffe im Bereich C₁₁-C₁₅ sowie Gemische hieraus.

Beispiele für die genannten Inertsubstanz umfassen:
- Isoparaffinische Kohlenwasserstoffgemische im Bereich von C₁₁-C₁₅ mit einem Siedebereich von 185-213°C und einem Flammpunkt von mehr als 60°C.
- Entaromatisierte Kohlenwasserstoffe in Form eines Gemisches von n-, iso- und cyclo-Aliphaten in einem Bereich von überwiegend C₉-C₁₁ und einem Siedebereich von 162-192°C und einem Flammpunkt von mehr als 40°C.
- Isoparaffinische Kohlenwasserstoffgemische im Bereich von C₉-C₁₂ und einem Siedebereich von 153-178°C und einem Flammpunkt von mehr als 40°C.
- Aliphatisch-aromatische Kohlenwasserstoffgemische, vornehmlich im Bereich von C₉-C₁₂ und einem Siedebereich von 153-198°C sowie einem Flammpunkt von mehr als 40°C.
- Aliphatisch-aromatische Kohlenwasserstoffgemische, vornehmlich im Bereich C₁₀-C₁₂ und einem Siedebereich von 180-210°C sowie einem Flammpunkt von mehr als 60°C.

Die beispielhaft genannten Inertsubstanzen können auch in Form von Gemischen der zuvor genannten verwendet werden.

Weiterhin können den Halbfertigprodukten sowie der applikationsfertigen Creme übliche und bekannte Zuschlagsstoffe und/oder Wirkstoffe beigegeben werden, wobei nur die Einschränkung besteht, daß die Zuschlag- und/oder Wirkstoffe aus Stoffgruppen ausgewählt sind, die sich in den Cremes homogen verteilen lassen. Beispiele hierfür sind Polysiloxan-Siliconharze zur Farbtonintensivierung von Klinkermauerwerk, Emulsionsfarben sowie dazugehörige Bindemittel.

Die abgemischte Inertcreme umfaßt 50 bis 95 Gew.-%, bevorzugt 60 bis 90 Gew.-%, besonders bevorzugt 80 Gew.-% Inertsubstanz, 0,05 bis 5 Gew.-%, bevorzugt 0,1 bis 3 Gew.-%, besonders bevorzugt 0,8 bis 1,5 Gew.-% Emulgator, 0 bis 10 Gew.-% weitere Hilfs- und Wirkstoffe ohne hydrophobierende Wirkung sowie einen Rest Wasser, wobei ein Wasseranteil im Bereich von 8 bis 20 Gew.-% bevorzugt ist.

Das cremeförmige wirkstoffhaltige Halbfertigprodukt enthält als Wirkstoffe vornehmlich Iso-Octyl-Silane, Alkylalkoxysiloxane oder Polysiloxane sowie Gemische hieraus. Beispiele für Wirkstoffe umfassen: C₁-C₂₀-Alkyl-C₂-C₆-Alkoxysilane, wobei als Alkylreste insbesondere Methyl-, Ethyl-, Propyl-, Butyl-, Pentyl-, Hexyl-, Heptylreste verwendet werden können, insbesondere in ihren n- oder Iso-Formen. Die Alkylreste können auch Cykloalkylreste wie Cyklopentyl-, Cyklohexyl- oder Norbornylreste sein. Auch können die Alkylreste mit Fluor-, Chlor-, Brom- und Jodatomen substituiert sein.

Als Alkoxyreste können Ethoxy-, Propoxy-, Butoxy-, Pentoxy- und Hexyloxreste verwendet werden, insbesondere in ihren n- und Iso-Formen. Auch können die Alkoxyreste teilweise halogeniert sein.

Als Organopolysiloxane können alle in den zuvor genannten Silanen lösbare Verbindungen verwendet werden. Die Organopolysiloxane können die gleichen Alkylreste wie die zuvor genannten Silane aufweisen.

Das wirkstoffhaltige Halbfertigprodukt umfaßt 10 bis 90 Gew.-%, vorzugsweise 20 bis 70 Gew.-%, besonders bevorzugt 40 bis 60 Gew.-% Wirkstoff; 0,01 bis 3 Gew.-%, bevorzugt 0,05 bis 1 Gew.-%, besonders bevorzugt 0,1 bis 0,3 Gew.-% Emulgator; 2 bis 20 Gew.-%, bevorzugt 3 bis 15 Gew.-%, besonders bevorzugt 5 bis 10 Gew.-% Wasser sowie ggfs. 0 bis 20 Gew.-% weitere übliche Zuschlagstoffe und/oder Wirkstoffe ohne hydrophibierende Wirkung.

Als Emulgatoren können bekannte und übliche anionische, kationische und nichtionische Emulgatoren verwendet werden. Insbesondere für die Inertcreme sind nichtionische Emulgatoren bevorzugt. Beispiele für die Emulgatoren umfassen: Polyvinylalkohole, Alkylpolyglykolether, Alkylarylpolyglykolether, Ethylenoxid/Propylenoxid-Blockcopolymere, Fettsäuren mit 6 bis 24 C-Atomen, Alkylpolyglykolside und polare Gruppen enthaltende lineare Organo(Poly)siloxane. Besonders bevorzugt sind Oxoalkoholpolyethylenglykolether mit 9 EO-Einheiten. Ein entsprechender Emulgator ist unter dem Handelsnamen Marlipal von der Fa. Hüls erhältlich.

Die Herstellung der applikationsfertigen Fassadencreme geschieht durch Abmischen der beiden Halbfertigprodukte. Das Mischen geschieht dabei in einer Creme-In-Creme-Phase. Zum Abmischen können alle üblichen Mischvorrichtungen verwendet werden.

Eine abgemischte bzw. aus den Grundsubstanzen emulgierte Imprägniercreme umfaßt: 30 bis 80 Gew.-%, bevorzugt 35 bis 65 Gew.-%, besonders bevorzugt 40 bis 50 Gew.-% Inertsubstanz, 10 bis 60 Gew.-%, bevorzugt 15 bis 50 Gew.-%, besonders bevorzugt 35 bis 55 Gew.-% Imprägniermittel, 0,05 bis 5 Gew.-%, bevorzugt 0,3 bis 3 Gew.-%, besonders bevorzugt 1 bis 2 Gew.-% Emulgator, optional 0 bis 10 Gew.-% weitere Hilfs- und Wirkstoffe ohne hydrophobierende Wirkung sowie einen Rest Wasser, wobei der Wasseranteil vorzugsweise im Bereich von 10 bis 30 Gew.-% liegt.

Die Viskosität der applikationsfertigen Fassendencreme wird so hoch eingestellt, daß ein Ablaufen oder Abrutschen der aufgetragenen Creme auf senkrechten oder überhängenden Flächen hinreichend vermieden wird. Bevorzugt ist dabei, daß, soweit die Imprägniercreme nach dem erfindungsgemäßen Verfahren hergestellt wird, die jeweiligen Halbfertigprodukte schon eine entsprechend hohe Viskosität aufweisen, wobei die Viskosität der Halbfertigprodukte in der gleichen Größenordnung liegen können. Hierdurch wird erreicht, daß die applikationsfertigen individualisierten Imprägniercremes keine unterschiedlichen Viskositäten aufweisen, je nach dem in welchen Anteilen die Halbfertigprodukte zugegeben werden. Es entfällt jede Nacharbeitung der applikationsfertigen Imprägniercreme hinsichtlich der Viskositätseinstellung, auch muß der Endanwender keine besondere Sorgfalt bei der Anwendung walten lassen, da die applikationsfähige Imprägniercreme, trotz unterschiedlicher Wirkstoffgehalte, jeweils das gleiche physikalische Verhalten zeigt.

Letzteres ermöglicht insbesondere den Einsatz von standardisierten Auftragungsverfahren, wodurch ein gleichbleibendes Ergebnis der Imprägnierung in einfacher Weise bereitgestellt werden kann.

Ein weiterer Vorteil der Imprägniercreme liegt darin, daß diese bei der Applikation eine weiße Färbung aufweist. Durch die weiße Färbung der Imprägniercreme kann der Endanwender durch einfachen Augenschein erkennen, welche zu behandelnden Flächen behandelt sind. Darüberhinaus ist durch einfache visuelle Kontrolle eine Abschätzung der aufgetragenen Schichtdicke möglich, wodurch bereits während der Auftragung eine Qualitätskontrolle ermöglicht wird.

Nach der Auftragung der Imprägniercreme auf den zu schützenden Baustoff gehen aus dieser die Lösemittel, insbesondere organische Lösemittel sowie die organischen Bestandteile in den Luftraum ab oder dringen in den Baustoff ein. Es handelt sich hierbei um einen langsamen und kontinuierlichen Vorgang. Gleichzeitig werden in entsprechendem Maße die Wirkstoffe aus der Cremephase freigesetzt, welche in den Baustoff eindringen und diesen hydrophobieren.

Durch den zeitkontrollierten Prozeß der kontinuierlichen Freisetzung der Imprägniermittel wird eine hinreichende Einwirkzeit der Imprägniermittel auf den Baustoff erreicht, um sowohl die gewünschte Eindringtiefe als auch Einwirkzeit für die Imprägniermittel zu bewirken.

Das Ende der Einwirkzeit ist durch den Endanwender durch Augenschein erkennbar. Dies wird durch den Abgang der weißen und damit gut sichtbaren aufgetragenen Imprägniercreme angezeigt. Hieraus ergibt sich für den Endanwender der Vorteil, daß dieser nicht genötigt ist, über den effektiven Endzeitpunkt der Einwirkung des Imprägniermittels hinaus zu warten, um sicherzustellen, daß der Imprängiervorgang abgeschlossen ist. Dem Endanwender ist es somit möglich, unmittelbar nach Erkennen des Ende des Imprägniervorganges mit weiteren bautechnischen Maßnahmen fortzufahren, ohne daß überflüssige Wartezeiten zwischen der Imprägnierung und den weiteren bautechnischen Maßnahmen auftreten.

### Beispiele

### Beispiel 1 (außerhalb der Erfindung):

Imprägniercreme mit einem Silan/Siloxan-Wirkstoffgehalt von 40 Gew.-%. Die Imprägniercreme ist geruchsarm und von weißer Farbe. Bezogen auf die Gesamtzusammensetzung werden 40 Gew.-% eines isoparaffinischen Kohlenwasserstoffgemisches mit einem Siedebereich von 185 bis 213°C und einem Flammpunkt von mehr als 60°C und 40 Gew.-% eines Alkylalkoxysilan- und -siloxan-Gemisches im Verhältnis 1:1 zusammengegeben und homogenisiert. Anschließend werden portionsweise 19,3 Gew.-% Wasser und 0,7 Gew.-% Emulgator Marlipal ^{®} hinzugegeben und in üblicher Weise emulgiert, bis eine cremeförmige Konsistenz erreicht ist. Die Inertcreme ist damit applikationsfertig.

### Beispiel 2:

Imprägniercreme mit einem Silan/Siloxan-Wirkstoffgehalt von 40 Gew.-%. Die Imprägniercreme ist geruchsarm und von weißer Farbe.

Zur erfindungsgemäßen Herstellung der Imprägniercreme werden unabhängig voneinander eine Inertcreme und eine wirkstoffhaltige Creme hergestellt.

Die Inercreme enthält, bezogen auf die Gesamtzusammensetzung der Imprägniercreme, 40 Gew.-% eines isoparaffinischen Kohlenwasserstoffgemisches mit einem Siedebereich von 185-213°C und einem Flammpunkt von mehr als 60°C, 0,4 Gew.-% Emulgator Marlipal ^{®} und 9,6 Gew.-% Wasser.

Die wirkstoffhaltige Creme besteht aus 40 Gew.-% eines Alkylalkoxysilan- und -siloxan-Gemisches im Verhältnis 1:1, 0,3 Gew.-% Emulgator und 9,7 Gew.-% Wasser, jeweils bezogen auf die Gesamtmenge der abgemischten Imprägniercreme.

Die beiden genannten Halbfertigprodukte werden im Gewichtsverhältnis von 1:1 zusammengegeben und mit einem Propellerrührer intensiv vermischt. Die Inertcreme ist damit applikationsfertig.

### Beispiel 3:

Imprägniercreme mit einem Silan/Siloxan-Wirkstoffgehalt von 40 Gew.-%. Die Imprägniercreme ist geruchsarm und von weißer Farbe.

Zur erfindungsgemäßen Herstellung der Imprägniercreme werden unabhängig voneinander eine Inertcreme und eine wirkstoffhaltige Creme hergestellt.

Die Inertcreme enthält, bezogen auf die Gesamtzusammensetzung der Imprägniercreme, 40 Gew.-% eines entaromatisierten Kohlenwasserstoffes mit einem Siedebereich von 162-192°C und einem Flammpunkt von mehr als 40°C, 0,5 Gew.-% Emulgator Marlipal ^{®} und 9,5 Gew.-% Wasser.

Die wirkstoffhaltige Creme besteht aus 40 Gew.-% eines Alkylalkoxysilan- und -siloxan-Gemisches im Verhältnis 1:1, 0,3 Gew.-% Emulgator und 9,7 Gew.-% Wasser, jeweils bezogen auf die Gesamtmenge der abgemischten Imprägniercreme.

Die beiden genannten Halbfertigprodukte werden im Gewichtsverhältnis von 1:1 zusammengegeben und mit einem Propellerrührer intensiv vermischt. Die Inertcreme ist damit applikationsfertig.

### Beispiel 4:

Imprägniercreme mit einem Silan/Siloxan-Wirkstoffgehalt von 32 Gew.-% sowie einem Polysiloxan (Siliconharz)-Gehalt von 5 Gew.-% zur Farbtonintensivierung von Ziegel- oder Klinkermauerwerk. Die Imprängiercreme ist geruchsarm und von weißer Farbe.

Zur erfindungsgemäßen Herstellung der Imprägniercreme werden unabhängig voneinander eine Inertcreme und eine wirkstoffhaltige Creme hergestellt.

Die Inercreme enthält, bezogen auf die Gesamtzusammensetzung der Imprägniercreme, 40 Gew.-% eines isoparaffinischen Kohlenwasserstoffgemische mit einem Siedebereich von 185-213°C und einem Flammpunkt von mehr als 60°C, 0,5 Gew.-% Emulgator Marlipal ^{®} und 9,5 Gew.-% Wasser.

Die wirkstoffhaltige Creme besteht aus 40 Gew.-% eines Alkylalkoxysilan- und -siloxan-Gemisches im Verhältnis 1:1, 0,3 Gew.-% Emulgator und 9,7 Gew.-% Wasser, jeweils bezogen auf die Gesamtmenge der abgemischten Imprägniercreme.

Die beiden genannten Halbfertigprodukte werden im Gewichtsverhältnis von 1:1 zusammengegeben und mit einem Propellerrührer intensiv vermischt. Die Inertcreme ist damit applikationsfertig.

Zur erfindungsgemäßen Herstellung der Imprägniercreme werden die zuvor genannten Halbfertigprodukte im Gewichtsverhältnis von 1:1 gemischt, wobei die Gesamtmenge 90 Gew.-% der applikationsfertigen Imprägniercreme beträgt. Das Cremegemisch wird mit einem Propellerrührer intensiv vermischt.

Anschließend werden, bezogen auf die Gesamtmenge der applikationsfertigen Imprägniercreme, 10 Gew.-% einer handelsübliche Siliconharz-Emulsion mit einem Bindemittelgehalt von ca. 50 %, als farbtonintensivierender Wirkstoff hinzugegeben, und das Gemisch wird intensiv mit einem Propellerrührer vermischt. Die Imprägniercreme ist damit applikationsfertig.

### Beispiel 5:

Imprägniercreme mit einem Silan/Siloxan-Wirkstoffgehalt von 32 Gew.-%. Die Imprägniercreme wird wie in Beispiel 3 hergestellt, jedoch mit dem Unterschied, daß der farbtonintensivierende Wirkstoff bereits der wirkstoffhaltigen Creme bei dessen Herstellung zugemischt wird. Die Herstellung der applikationsfertigen Imprägniercreme geschieht durch das Zusammengeben der Wirkstoffcreme und der Inertcreme im Verhältnis 6:4 und anschließendem Mischen mit einem Propellerrührer. Die Imprägniercreme ist damit applikationsfertig.

### Beispiel 6:

Grundiercreme zur hydrophobierenden Grundierung poröser, mineralischer Baustoffe wie z. B. Ziegel, Putz und Klinker-Steine zum nachträglichen Auftragen handelsüblicher Dispersions- und Siliconharz-Emulsionsfarben. Die Hydrophobiercreme hat einen Silan/Siloxan-Wirkstoffgehalt von 15 Gew.-%. Die applikationsfertige Grundiercreme ist geruchsneutral und von weißer Farbe.

Die in dem erfindungsgemäßen Verfahren verwendete Inertcreme besteht aus 65 Gew.-% eines isoparaffinischen Kohlenwasserstoffgemisches mit C₉-C₁₂-Alkylresten mit einem Siedebereich von 153-178°C und einem Flammpunkt von mehr als 40 °C, 0,65 Gew.-% Emulgator Marlipal ^{®} und 15,6 Gew.-% Wasser, alles bezogen auf die Gesamtmenge der Grundiercreme.

Die erfindungsgemäß verwendete Wirkstoffcreme besteht aus 15 Gew.-% eines Alkylalkoxysilan- und -siloxan-Gemische im Verhältnis 1:1, 0,056 Gew.-% Emulgator und 3,694 Gew.-% Wasser, alles bezogen auf die Gesamtmenge der Grundiercreme.

Die genannten Halbfertigprodukte der Inertcreme und der Wirkstoffcreme werden zur Herstellung der Grundiercreme im Verhältnis 81,25:18,75 miteinander vermengt und mit einem Propellerrührer intensiv vermischt, ohne daß dabei die Konsistenz der beiden Cremes verändert wird.

## Patentansprüche

1. Verfahren zur Herstellung einer Creme zur Hydrophobierung von Baustoffen auf der Basis von Organosiliciumverbindungen, **dadurch gekennzeichnet, daß** die applikationsfertige Creme durch das Abmischen zweier cremeförmiger Halbprodukte hergestellt wird, wobei als das eine Halbfertigprodukt eine wirkstoffhaltige Wasser-in-Öl-Emulsion verwendet wird und als das andere Halbfertigprodukt eine wirkstofffreie Wasser-in-Öl-Emulsion einer Kohlenwasserstoffkomponente verwendet wird.

2. Verfahren nach Anspruch 1, **dadurch gekennzeichnet, daß** die Kohlenwasserstoffkomponente in der wirkstofffreien Wasser-in-Öl-Emulsion in einer Menge von 30 bis 80 Gew.-%, bevorzugt 35 bis 65 Gew.-%, besonders bevorzugt 40 bis 50 Gew.- %, bezogen auf die Gesamtzusammensetzung der Creme, enthalten ist.

3. Verfahren nach einem der vorstehenden Ansprüche, **dadurch gekennzeichnet, daß** die wirkstoffhaltige Wasser-in-Öl-Emulsion als hydrophobierenden Wirkstoff hydrophobierende Organosilicium-Verbindungen in einer Menge von 10 bis 60 Gew.-%, bevorzugt 15 bis 50 Gew.-%, besonders bevorzugt 35 bis 55 Gew.-%, bezogen auf die Gesamtzusammensetzung der Creme, enthält.

4. Verfahren nach einem der vorstehenden Ansprüche, **dadurch gekennzeichnet, daß** die Creme eine Zusammensetzung von 30 bis 80 Gew.-%, bevorzugt 35 bis 65 Gew. %, besonders bevorzugt 40 bis 50 Gew.-% wirkstofffreier Kohlenwasserstoffkomponente, 10 bis 60 Gew.-%, bevorzugt 15 bis 50 Gew. %, besonders bevorzugt 35 bis 55 Gew.-% Imprägniermittel in Form von Organosilicium-Verbindungen, 0,05 bis 5 Gew.-%, bevorzugt 0,3 bis 3 Gew.-%, besonders bevorzugt 1 bis 2 Gew.-% Emulgator, optional 0 bis 10 Gew.-% weitere Hilfs- und Wirkstoffe ohne hydrophobierende Wirkung sowie einen Rest Wasser aufweist, wobei der Wasseranteil vorzugsweise im Bereich von 10 bis 30 Gew.-% liegt.

5. Verfahren nach einem der vorstehenden Ansprüche, **dadurch gekennzeichnet, daß** die Halbfertigprodukte die gleiche oder nahezu gleiche Konsistenz aufweisen.

6. Verfahren nach einem der vorstehenden Ansprüche, **dadurch gekennzeichnet, daß** als wirkstofffreies Halbfertigprodukt eine Wasser-in-Öl-Emulsion verwendet wird, die auf der Basis eines isoparaffinischen Kohlenwasserstoffgemisches, eines entaromatisierten Kohlenwasserstoffgemisches enthaltend n-, iso- und cyclo-Aliphaten oder eines aliphatisch/aromatischen Kohlenwasserstoffgemisches hergestellt ist.

7. Verfahren nach einem der vorstehenden Ansprüche, **dadurch gekennzeichnet, daß** als wirkstofffreies Halbfertigprodukt eine Emulsion eines isoparaffinischen Kohlenwasserstoffgemisches, insbesondere eines Kohlenwasserstoffgemisches bestehend aus C₁₁-C₁₅-Kohlenwasserstoffen oder aus C₉-C₁₂-Kohlenwasserstoffigemischen, verwendet wird.

8. Verfahren nach einem der vorstehenden Ansprüche, **dadurch gekennzeichnet, daß** weitere Hilfs- und/oder Wirkstoffe beim Abmischen der Halbfertigprodukte hinzugegeben werden und/oder daß die zusätzlichen Hilfs- und/oder Wirkstoffe einem der Halbfertigprodukte bei dessen Herstellung und vor dem Abmischen zugeschlagen werden.

9. System zur Herstellung einer Creme zur Hydrophobierung von Baustoffen auf der Basis von Organosilicium-Verbindungen, **dadurch gekennzeichnet, daß** das System aus zwei unabhängig voneinander hergestellten cremeförmigen Halbfertigprodukten besteht, wobei das eine Halbfertigprodukt eine wirkstoffhaltige Wasser-In-Öl-Emulsion ist und das andere Halbfertigprodukt eine wirkstofffreie Wasser-In-Öl-Emulsion ist, und wobei durch Abmischen der cremeförmigen Halbfertigprodukte am Ort der Verwendung die applikationsfertige Creme hergestellt wird.

10. System nach Anspruch 9, **dadurch gekennzeichnet, daß** das wirkstoffhaltige Halbfertigprodukt 10 bis 90 Gew.-%, vorzugsweise 20 bis 70 Gew.-%, besonders bevorzugt 40 bis 60 Gew.-% Wirkstoff; 0,01 bis 3 Gew.-%, bevorzugt 0,05 bis 1 Gew.-%, besonders bevorzugt 0,1 bis 0,3 Gew.-% Emulgator; 2 bis 20 Gew.-%, bevorzugt 3 bis 15 Gew.-%, besonders bevorzugt 5 bis 10 Gew.-% Wasser sowie gegebenenfalls 0 bis 20 Gew.-% weitere übliche Zuschlagstoffe und/oder Wirkstoffe ohne hydrophibierende Wirkung umfaßt.

11. System nach Anspruch 9 oder Anspruch 10, **dadurch gekennzeichnet, daß** die Halbfertigprodukte die gleiche oder nahezu gleiche Konsistenz aufweisen.

12. System nach einem der Ansprüche 9 bis 11, **dadurch gekennzeichnet, daß** das wirkstofffreie Halbfertigprodukt eine Wasser-in-Öl-Emulsion ist, die auf der Basis eines isoparaffinischen Kohlenwasserstoffgemisches, eines entaromatisierten Kohlenwasserstoffgemisches, enthaltend n-, iso- und cyclo-Aliphaten oder eines aliphatisch/aromatischen Kohlenwasserstoffgemisches hergestellt ist.

13. System nach einem der Ansprüche 9 bis 12, **dadurch gekennzeichnet, daß** das wirkstofffreie Halbfertigprodukt eine Emulsion eines isoparaffinischen Kohlenwasserstoffgemisches ist, insbesondere eines Kohlenwasserstoffgemisches aus C₁₁-C₁₅-Kohlenwasserstoffen oder C₉-C₁₂-Kohlenwasserstoffen.

14. System nach einem der Ansprüche 10 bis 14, **dadurch gekennzeichnet, daß** weitere Hilfs- und/oder Wirkstoffe beim Abmischen der Halbfertigprodukte hinzugegeben werden und/oder daß die zusätzlichen Hilfs- und/oder Wirkstoffe einem der Halbfertigprodukte bei dessen Herstellung und vor dem Abmischen zugeschlagen werden.

## Claims

1. A method of manufacturing a cream for rendering building materials based on organosilicate compounds hydrophobic, **characterised in that** the cream is manufactured ready for application by the mixing of two creamy semi-finished products, wherein a water-in-oil emulsion containing an active agent is used as one semi-finished product and a water-in-oil emulsion, which contains no active agent, of a hydrocarbon component is used as the other semi-finished product.

2. A method as claimed in Claim 1, **characterised in that** the hydrocarbon component in the water-in-oil emulsion without an active agent is contained in an amount of 30 to 80 wt.%, preferably 35 to 65 wt.%, particularly preferably 40 to 50 wt.%, with respect to the total composition of the cream.

3. A method as claimed in any one of the preceding claims, **characterised in that** the water-in-oil emulsion containing the active agent contains hydrophobic organosilicate compounds as the hydrophobic active agent in an amount of 10 to 60 wt.%, preferably 15 to 50 wt.%, particularly preferably 35 to 55 wt.%, with respect to the entire composition of the cream.

4. A method as claimed in one of the preceding claims, **characterised in that** the cream has a composition of 30 to 80 wt.%, preferably 35 to 65 wt.%, particularly preferably 40 to 50 wt.% hydrocarbon component with no active agent, 10 to 60 wt.%, preferably 15 to 50 wt.%, particularly preferably 35 to 55 wt.% impregnating agent in the form of organosilicate compounds, 0.5 to 5 wt.%, preferably 0.3 to 3 wt.%, particularly preferably 1 to 2 wt.% emulsifier, optionally 0 to 10 wt.% further adjuvants and active agents with no hydrophobic action and a residue of water, the proportion of water preferably being in the range of 10 to 30 wt.%.

5. A method as claimed in one of the preceding claims, **characterised in that** the semi-finished products have the same or nearly the same consistency.

6. A method as claimed in one of the preceding claims, **characterised in that** a water-in-oil emulsion is used as the semi-finished product with no active agent which has been produced on the basis of an isoparaffinic hydrocarbon mixture, a de-aromatised hydrocarbon mixture containing n-, iso- and cyclo-aliphates or an aliphatic/aromatic hydrocarbon mixture.

7. A method as claimed in one of the preceding claims, **characterised in that** an emulsion of an isoparaffinic hydrocarbon mixture, particularly a hydrocarbon mixture consisting of C₁₁-C₁₅-hydrocarbons or of C₉-C₁₂- hydrocarbons, is used as the semi-finished product with no active agent.

8. A method as claimed in one of the preceding claims, **characterised in that** further adjuvants and/or active agents are added during the mixing of the semi-finished products and/or that the additional adjuvants and/or active agents are added to one of the semi-finished products in its manufacture and before the mixing process.

9. A system for manufacturing a cream for rendering building materials hydrophobic on the basis of organosilicate compounds, **characterised in that** the system consists of two creamy semi-finished products produced independently from one another, wherein the one semi-finished product is a water-in-oil emulsion containing an active agent and the other semi-finished product is a water-in-oil emulsion with no active agent and wherein the cream is produced ready for application by the mixing of the creamy semi-finished products at the location of use.

10. A system as claimed in claim 9, **characterised in that** the semi-finished product containing the active agent includes 10 to 90 wt.%, preferably 20 to 70 wt.%, particularly preferably 40 to 60 wt.% active agent; 0.01 to 3 wt.%, preferably 0.05 to 1 wt.%, particularly preferably 0.1 to 0.3 wt.% emulsifier; 2 to 20 wt.%, preferably 3 to 15 wt.%, particularly preferably 5 to 10 wt.% water and optionally 0 to 20 wt.% further conventional additives and/or active agents with no hydrophobic action.

11. A system as claimed in Claim 9 or Claim 10, **characterised in that** the semi-finished products have the same or nearly the same consistency.

12. A system as claimed in one of claims one of Claims 9 to 11, **characterised in that** the semi-finished product with no active agent is a water-in-oil emulsion, which has been produced on the basis of an isoparaffinic hydrocarbon mixture, a de-aromatised hydrocarbon mixture containing n-, iso- and cyclo-aliphates or an aliphatic/aromatic hydrocarbon mixture.

13. A system as claimed in one of Claims 9 to 12, **characterised in that** the semi-finished product with no active agent is an emulsion of an isoparaffinic hydrocarbon mixture, particularly a hydrocarbon mixture of C₁₁-C₁₅-hydrocarbons or C₉-C₁₂-hydrocrbons.

14. A system as claimed in one of Claims 10 to 14, **characterised in that** further adjuvants and/or active agents are added during the mixing of the semi-finished products and/or that the additional adjuvants and/or active agents are added to one of the semi-finished products during its manufacture and before the mixing process.

## Revendications

1. Procédé de fabrication d'une crème pour l'hydrophobisation de matériaux de construction à base de composés organosiliciés, **caractérisé en ce que** la crème prête à l'application est fabriquée par mélange de deux semi-produits en forme de crème, dans lequel on utilise, comme l'un des produits semi-finis, une émulsion eau-dans-huile contenant le principe actif et, comme autre produit semi-fini, une émulsion eau-dans-huile d'un composant hydrocarboné, dépourvue de principe actif.

2. Procédé selon la revendication 1, **caractérisé en ce que** le composant hydrocarboné est présent dans l'émulsion eau-dans-huile dépourvue de principe actif, en une quantité allant de 30 à 80 % en poids, de préférence de 35 à 65 % en poids, de manière particulièrement préférée, de 40 à 50 % en poids par rapport à la composition totale de la crème.

3. Procédé selon l'une quelconque des revendications précédentes, **caractérisé en ce que** l'émulsion eau-dans-huile contenant le principe actif contient, comme principe actif hydrophobisant, des composés organosiliciés hydrophobisants en une quantité de 10 à 60 % en poids, de préférence de 15 à 50 % en poids, de manière particulièrement préférée de 35 à 55 % en poids par rapport à la composition totale de la crème.

4. Procédé selon l'une quelconque des revendications précédentes, **caractérisé en ce que** la crème présente la composition suivante :
de 30 à 80 % en poids, de préférence de 35 à 65 % en poids, de manière particulièrement préférée de 40 à 50 % en poids de composants hydrocarboné dépourvu de principe actif,
de 10 à 60 % en poids, de préférence de 15 à 50 % en poids, de manière particulièrement préférée de 35 à 55 % en poids d'agent d'imprégnation sous la forme de composés organosiliciés,
de 0,05 à 5 % en poids, de préférence de 0,3 à 3 % en poids, de manière particulièrement préférée de 1 à 2 % en poids d'émulsifiant,
éventuellement de 0 à 10 % en poids d'autres adjuvants et principes actifs n'ayant pas d'effet hydrophobisant,
le reste étant de l'eau, la teneur en eau se situant de préférence dans une plage de 10 à 30 % en poids.

5. Procédé selon l'une quelconque des revendications précédentes, **caractérisé en ce que** les produits semi-finis présentent la même ou pratiquement la même consistance.

6. Procédé selon l'une quelconque des revendications précédentes, **caractérisé en ce que** l'on utilise comme produit semi-fini dépourvu de principe actif, une émulsion eau-dans-huile qui est produite à base d'un mélange d'hydrocarbure isoparaffinique, d'un mélange d'hydrocarbures désaromatisé contenant des composés n-, iso- et cyclo-aliphatiques ou d'un mélange d'hydrocarbures aliphatiques/aromatiques.

7. Procédé selon l'une quelconque des revendications précédentes, **caractérisé en ce que** l'on utilise, comme produit semi-fini dépourvu de principe actif, une émulsion d'un mélange d'hydrocarbures isoparaffinique, en particulier de mélanges d'hydrocarbures constitués d'hydrocarbures en C₁₁-C₁₅ ou de mélanges d'hydrocarbures en C₉-C₁₂.

8. Procédé selon l'une quelconque des revendications précédentes, **caractérisé en ce que** d'autres adjuvants et/ou principes actifs sont ajoutés lors du mélange des produits semi-finis et/ou que les adjuvants et/ou principes actifs additionnels sont ajoutés à l'un des produits semi-finis lors de sa production et avant le mélange.

9. Système de fabrication d'une crème pour l'hydrophobisation de matériaux de construction à base de composés organosiliciés, **caractérisé en ce que** le système est constitué de deux produits semi-finis en forme de crème, produits indépendamment l'un de l'autre, dans lequel l'un des produits semi-finis est une émulsion eau-dans-huile contenant le principe actif, dans lequel l'autre produit semi-fini est une émulsion eau-dans-huile dépourvue de principe actif, et dans lequel la crème prête à l'application est produite par mélange des produits semi-finis en forme de crème sur le lieu d'utilisation.

10. Système selon la revendication 9, **caractérisé en ce que** le produit semi-fini contenant le principe actif comprend de 10 à 90 % en poids, de préférence 20 à 70 % en poids, de manière particulièrement préférée, 40 à 60 % en poids de principe actif, de 0,01 à 3 % en poids, de préférence de 0,05 à 1 % en poids, de manière particulièrement préférée de 0,1 à 0,3 % en poids d'émulsifiant, de 2 à 20 % en poids, de préférence de 3 à 15 % en poids, de manière particulièrement préférée de 5 à 10 % en poids et, éventuellement, de 0 à 20 % en poids d'autres additifs et/ou principes actifs habituels sans effet hydrophobisant.

11. Système selon la revendication 9 ou la revendication 10, **caractérisé en ce que** les produits semi-finis présentent la même consistance ou une consistance pratiquement identique.

12. Système selon l'une quelconque des revendications 9 à 11, **caractérisé en ce que** le produit semi-fini dépourvu de principe actif est une émulsion eau-dans-huile qui est fabriquée à base d'un mélange d'hydrocarbures isoparaffiniques, d'un mélange d'hydrocarbures désaromatisés contenant des composés n-, iso- et cyclo-aliphatiques ou d'un mélange d'hydrocarbures aliphatiques/aromatiques.

13. Système selon l'une quelconque des revendications 9 à 12, **caractérisé en ce que** le produit semi-fini dépourvu de principe actif est une émulsion d'un mélange d'hydrocarbures isoparaffinique, en particulier d'un mélange d'hydrocarbures comportant des hydrocarbures en C₁₁-C₁₅ ou des hydrocarbures en C₉-C₁₂.

14. Système selon l'une quelconque des revendications 10 à 13, **caractérisé en ce que** d'autres adjuvants et/ou principes actifs sont ajoutés lors du mélange des produits semi-finis et/ou que les adjuvants et/ou principes actifs additionnels sont ajoutés à l'un des produits semi-finis lors de sa production et avant le mélange.
